# EUROPEAN PATENT APPLICATION

(11) **EP 2 330 538 A1**
(43) Date of publication of application: **08.06.2011**
(21) Application number: 09252702.7
(22) Date of filing: 30.11.2009
(51) Int. Cl.: G06K 19/07

(54) **Radio frequency transponder**

(71) Applicant: NXP B.V., 5656 AG Eindhoven (NL)
(72) Inventor: Amtmann, Franz, Redhill Surrey RH1 1DL (GB); Steiner, Mario, Redhill Surrey RH1 1DL (GB); Brandl, Roiand, Redhill Surrey RH1 1DL (GB); Bischof, Kurt, Redhill Surrey RH1 1DL (GB)
(74) Representative: Burton, Nick

(57) **Abstract**

A tag (30) for a radiofrequency identification communication system, the tag (30) comprising an antenna (31) for receiving a radiofrequency signal and an integrated circuit (35) connected to the antenna (31), the integrated circuit (35) comprising: a modulator (34) configured to modulate a signal transmitted by the antenna (31); a controller (33) configured to provide a modulation signal to the modulator (34); and a power module (32) configured to generate a power supply for the controller (33) from the received radiofrequency signal, wherein the modulator (34) comprises an adjustable impedance circuit configured to selectively reduce the depth of modulation of the signal transmitted by the antenna dependent on the modulation signal provided by the controller (33).

## Description

The invention relates to a radio frequency transponder and to a system in which such a transponder is used, and in particular to a passive or semi-passive RFID tag system in which an RFID tag is configured to provide a modulated signal.

Radio Frequency identification (RFID) systems are widely used for identification, location and tracking of many different types of items, typically through the use of passive RFID tags affixed to the item in question. Such tags are used in numerous applications, including retail security tags, tyre pressure monitors and electronic passports. Passive RFID tags comprise an aerial and an integrated circuit chip, the chip being powered by an interrogation signal received via the aerial, the signal being typically in the form of a single frequency RF signal. The tag then responds to the interrogation signal through modulating the reflectivity of the aerial. The aerial is therefore used both for providing power to the tag and for providing a signal to the reader. The reflectivity of the aerial can be modulated by switching an impendance in and out of the aerial circuit.

An example of a system utilising such a modulation scheme is disclosed in GB2202415, in which a pair of variable capacitance diodes are connected across a half-wave dipole antenna. The diodes are biased to tune and detune the antenna at a particular frequency, resulting in modulation of the reflectivity of the antenna.

A further example of a system utilising a similar type of modulation scheme, known in the art as backscatter modulation, is disclosed in EP0851599, in which a variable impedance in the form of a CMOS gate is connected to an antenna for modulating the reflectivity of the antenna. A modulating signal is provided to the CMOS gate by a shift register that provides information for the modulation signal from a data storage device. The information may be stored in a non-volatile memory.

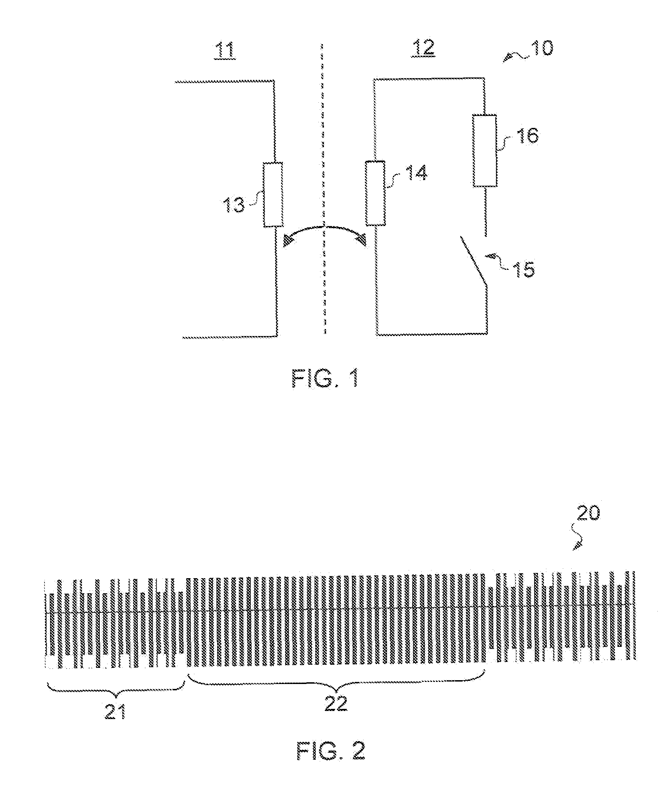

A simplifled circuit diagram of a backscatter modulation RFID system 10 is illustrated in figure 1. An interrogator or reader 11 comprising a first aerial 13 transmits a continuous wave (CW) radiofrequency signal to a tag 12 having a second aerial 14. A switch 15 connected to the second aerial 14 is operated to modulate the reflectivity of the second aerial 14 to the incoming signal. When the switch 15 is closed, current flows in the circuit comprising the second aerial 14, the circuit having an impedance 16. and the second aerial 14 reflects (or retransmits) a portion of the incoming signal. When the switch 15 is open, the second aerial does not reflect the incoming signal, or at least reflects a smaller portion of the incoming signal. By operating the switch 15, data can be encoded on the reflected signal from the second aerial 14. The modulation can be detected by the reader 11, for example by using a separate receiver aerial or by using the same aerial used for both transmitting and receiving.

The tag may operate according to two different principles. In a first principle, commonly used at low frequencies (for example <135kHz, but possible also at higher frequencies such as 13.56MHz), the change of impedance in the second aerial circuit caused by operating the switch 15 causes a change in current flowing through the aerial coil. This principle is known as load modulation, because this change is detected as a modulation in an apparent load seen by the reader. The principle works only with the tag operating in the near field, because load modulation relies on transformer coupling of the reader and tag aerial coils.

At higher frequencies, (for example UHF frequencies, at 865MHz, 929MHz, 955MHz), the impedance change caused by operating switch 15 causes instead a change of antenna matching. For optimum energy transfer, the antenna is tuned to impedance match when the switch 15 is open. If the switch is closed this matching no longer applies and a part of the available energy is reflected back to the reader. This second principle of operation is generally known as backscatter modulation.

An example of the general form of a reflected signal 20 is illustrated in figure 2, the reflected signal 20 comprising a modulated portion 21 and an unmodulated portion 22. The degree of modulation applied to the signal 20 is constant, although the actual depth of modulation will vary depending on the distance from the tag to the reader and on the presence of any additional over-voltage protection in the tag to avoid the chip being damaged if the tag is held too close to the reader.

A passive RFID tag uses the incoming signal to provide power to the tag, for example by use of an additional rectifying circuit connected to the aerial and a power storage device, for example in the form of a capacitor. A small amount of power is then available for a digital logic circuit in the tag such as a microcontroller or a state machine to provide a switching signal to the switch 15 for modulating the antenna reflectivity. This power is only available if the tag is within range of a signal being transmitted at the appropriate frequency by a reader. Outside this range the tag is unable to operate.

A passive RFID system is consequently only operational when two factors are met. Firstly, the tag needs to be within range of a reader such that sufficient power can be drawn from the signal transmitted by the reader. Secondly, when the tag is within range of a reader, the reader needs also to be able to detect and decode the very much smaller strength modulated reflected signal from the tag. The detection range of an RFID system can be extended by using a higher power reader, possibly with a more sensitive detector circuit, or by using a more sensitive antenna as part of the tag. A more sensitive detector circuit, however, only helps up to a point, as a signal may be too weak relative to a background noise level to be detected. A weak backscatter signal can therefore only be decoded if it is significantly above this noise level. A further problem is that the use of a higher power reader may result in the possiblity of extracting information from RFID tags without authorisation, for example by enabling remote reading of information from a personal identity card without the owner being aware. This results in potential privacy and security concerns.

It is an object of the invention to address one or more of the above problems.

According to a first aspect of the invention there is provided a tag for a radiofrequency identification communication system, the tag comprising an antenna for receiving a radiofrequency signal and an integrated circuit connected to the antenna, the integrated circuit comprising:
a modulator configured to modulate a signal transmitted by the antenna;
a controller configured to provide a modulation signal to the modulator; and
a power module configured to generate a power supply for the controller from the received radiofrequency signal,
wherein the modulator comprises an adjustable impedance circuit configured to selectively reduce the depth of modulation of the signal transmitted by the antenna dependent on the modulation signal provided by the controller.

The tag may be configured to operate using modulated backscatter, wherein the modulator is configured to modulate the reflectivity of the antenna to the received radiofrequency signal. In such embodiments, the tag is preferably configured to operate in the UHF band, i.e. between 300 MHz and 3Ghz, and preferably within the range 850 to 960MHz.

The tag may alternatively be configured to operate using load modulation, where the modulator is configured to modulate the load of the antenna to the received radiofrequency signal. In such embodiments the tag is preferably configured to operate in the LF band, i.e. between 30kHz and 300 kHz, and preferably at frequencies below 135kHz. Tags according to these embodiments, may be configured to operate within the HF band, i.e. between 3 and 30Mhz, and preferably at 13.5BMHz, a frequency that is specified by ISO/IEC 14443, used for proximity cards such as RFID-enabled passports.

The adjustable impedance circuit may comprise two switchable impedance elements connected in parallel and operable by the controller to modulate the reflectivity of the antenna at two corresponding depths of modulation.

The switchable impedance elements may each comprise a transistor switch in series with an impedance element. The impedance element may be a resistor. Each switchable impedance element may comprise a field effect transistor. The impedance element and the switch of each switchable impedance element may be combined in one element such as a transistor. In some embodiments the parallel paths may be combined, for example by having a single transistor being controllable by two different gate voltage, which has the effect of generating two different resistance values across the transistor.

One or more further impedance elements may be connected in parallel with the two switchable impedance elements.

The critical link of an RFID system is the link from tag to reader because the signal transmitted by the tag is relatively very weak compared with the received radiofrequency signal. The transmitted signal is therefore not detectable at high distances. By making the strength of this return link signal from the tag to the reader adjustable, the invention allows for more control over the range within which the signal can be detected. This can be useful where additional security or privacy is required.

The modulator may comprise the adjustable impedance circuit The adjustable impedance circuit may comprise two or more switchable impedance elements connected in parallel, a first one of which is operable by the controller to provide the modulation signal and a second one of which is operable by the controller to control the depth of modulation of the signal. Further impedance elements connected in parallel may be provided for further control of the modulation depth. The controller may be configured to switch one or more of the impedance elements according to the depth of modulation. Each switchable impedance element may comprise an impedance in series with a transistor switch, or alternatively may comprise a transistor alone. Each switchable impedance element may comprise a resistor.

According to a second aspect of the invention there is provided an integrated circuit for a radiofrequency identification communication system tag, integrated circuit being connectable to an antenna and comprising:
a modulator configured to modulate a signal transmitted by the antenna;
a controller configured to provide a modulation signal to the modulator; and
a power module configured to generate a power supply for the controller from the received radiofrequency signal.
wherein the modulator comprises an adjustable impedance circuit configured to selectively reduce the depth of modulation of the signal transmitted by the antenna dependent on the modulation signal provided by the controller.

The invention of the second aspect may comprise corresponding optional or preferable features as described above in relation to the invention of the first aspect.

According to a third aspect of the invention there is provided a method of operating the tag according to the first aspect of the invention, the method comprising:
the antenna receiving a radiofrequency signal;
the power module providing electrical power derived from the radiofrequency signal to the controller.
the controller reading identification information and control information from a memory; and
the controller providing a modulation signal to the modulator to cause the antenna to transmit a radiofrequency signal having a modulation depth according to the control information.

The invention is described in further detail below by way of example and with reference to the accompanying drawings, in which:
figure 1 is a schematic diagram of a passive RFID tag system;
figure 2 is a schematic diagram of a modulated signal;
figure 3 is a schematic diagram of an RFID tag circuit according to the invention:
figure 4 is a schematic circuit diagram of an exemplary modulator comprising a switchable resistor network;
figure 5 is a block diagram of a first embodiment of an RFID IC; and
figure 6 is a block diagram of a second embodiment of an RFID IC.

Figures 1 and 2 have already been described above in relation to the background to the invention.

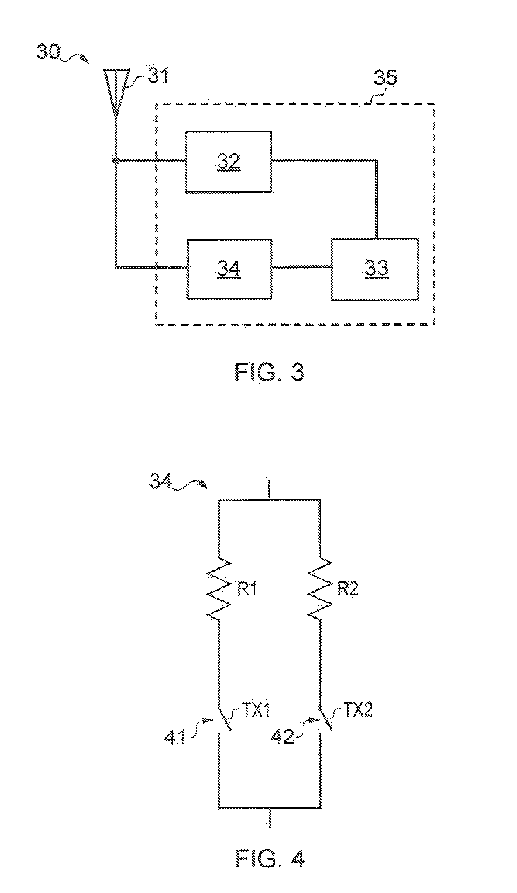

Illustrated in figure 3 is a schematic block diagram of an exemplary embodiment of the invention, in the form of an RFID tag 30. The tag 30 comprises an aerial 31 connected to a rectifier/regulator 32, which functions as a power module for supplying electrical power to a controller 33. The controller 33 is connected to a modulator 34, which is connected to the aerial 31 and is operable to modulate the reflectivity of the aerial 31 under the control of the controller 33. In alternative embodiments the modulator 34 may be connected to the rectified output node of the rectifier 32 or to an intermediate node of the rectifier circuit 32.

When the aerial 31 receives a radio frequency signal of sufficient strength, the power module 32 provides electrical power to the controller 33, which then begins operation. Once sufficient power has been provided, the controller 33 provides a modulation signal to the modulator 34 by sending a sequence of switching signals to the modulator 34. The sequence will typically be stored in non-volatile memory on the RFID chip, for example in the form of an EEPROM (Electrically Erasable Programmable Read-Only Memory) configured to store data representing a unique identification code for the RFID chip and other information used to control the functioning of the controller 33. Other possibilities also exist suitable for storing data on the tag, such as one-time or multi-time programmable fuses or baseline memories.

Typically the tag 30 will be a passive tag, i.e. d rawing all power from the signal received via the aerial 31. In certain embodiments, the tag 30 may be a semi-passive tag, i.e. having onboard power storage such as a battery, but still using the principles described herein of load modulation or backscatter.

Where the tag has sufficient power to begin transmitting, the tag may begin transmitting first (known as a 'tag talks first' or TTF system), however in most cases the tag will be part of a system in which the reader begins transmissions (known as a 'reader talks first' or RTF system). In an RTF system, each tag in the system may be configured to wait to receive a valid reader command, such as an inventory or other type of read command, before the tag begins transmitting data.

Figure 4 illustrates an exemplary embodiment of a modulator 34, comprising first and second switchable impedances connected in parallel. The switchable impedances each comprise a resistor R1, R2 and a transistor switch 41, 42 connected in series. Control signals TX1, TX2 from the controller 33 (figure 3) cause the switches 41, 42 to open and close, thereby changing the impedance of the modulator 34. Operating only the first switch 41 causes the impedance of the circuit to vary between open circuit and a resistance R1, while operating both switches 41, 42 together causes the impedance to vary between open circuit and a lower impedance of R1R2/(R1+R2). Therefore, by selecting the values of R1 and R2, two different depths of modulation can be selected when operating the modulator 34. Operating only one of the impedances will result in a lower depth of modulation than operating both, since the overall impedance of the circuit will be higher when only one of the switches 41, 42 is closed compared to when both switches 41, 42 are closed. Further switchable impedances can be added to the modulator 34 for selecting further depths of modulation.

The switchable impedances may be provided by switching transistors in conjunction with discrete resistors, as in figure 4, or by using the internal resistance of a switching transistor such as a FET.

Alternative methods for generating the modulated backscatter signal may be used, such as modulating the power consumption of the IC, for example by connecting the modulator 34 between the power module 32 and the controller rather than between the aerial 31 and the controller 33.

In alternative embodiments, where the modulator is connected between the aerial and the controller, capacitive impedance elements may be used in place of resistive elements.

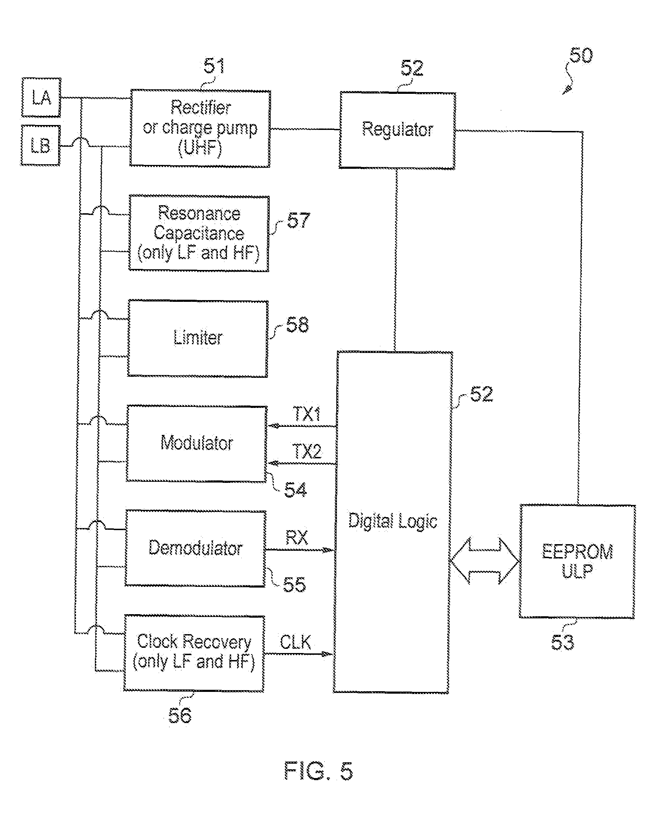

Figure 5 illustrates a more detailed exemplary embodiment of an IC chip 50 according to the invention. The chip 50 is connectable to an aerial via aerial connections LA, LB, which connect to a power module comprising a rectifier or charge pump 51 and a regulator 52, the regulator 52 being connected to supply power to a controller comprising digital logic 52 and an ultra low power (ULP) EEPROM 53. The digital logic 52 communicates with the memory 53 to receive identification information for the chip and control information and, in certain embodiments, to write to the memory 53, for example to overwrite the control information. The digital logic 52 transmits control signals TX1, TX2 to a modulator 54, which may be in the form of the modulator 34 as described above, and receives signals RX from a demodulator 55. The digital logic may also, in certain LF and HF embodiments, receive a clock signal CLK from a clock recovery module 56. In these embodiments a resonance capacitance 57 may also be connected to the aerial connections LA, LB. A limiter 58 may be provided to limit the signal received from the aerial, for example to protect the digital logic from excessive signal strengths.

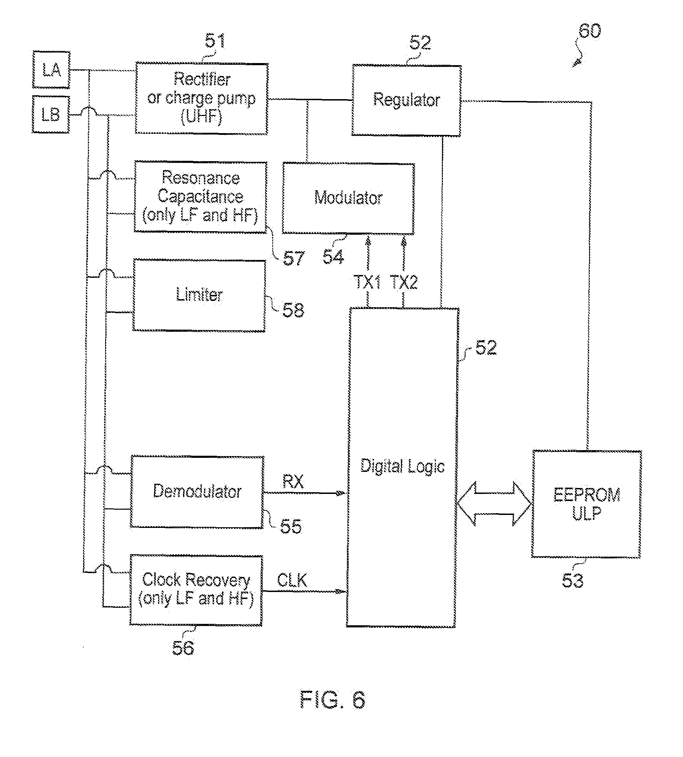

An alternative embodiment of an IC chip 60 is illustrated in figure 6, having corresponding modules to those in the chip 50 of figure 5, but with the modulator 54 connected instead between the digital logic 52 and the output of the rectifier 51.

For controlling the level of modulation provided by the modulator 54, one or more bits may be set in the memory 53 to instruct the digital logic 52 to control the modulator 54 according to a specified depth of modulation. For example, a bit may be set when the chip is manufactured that specifies to the digital logic 52 whether the backscatter signal should be weak or strong, which can be implemented by the digital logic 52 using one or both of the control signals TX1, TX2 when controlling the modulator 54. The degree of modulation may alternatively be set in the memory by programming the digital logic 52 with a coded radiofrequency signal, for example when the tag is used for stock control and an item that has been paid for is to be effectively de-activafied by shortening the reading distance.

For low frequency applications (for example <135kHz), the RFID tag may be configured to respond actively by transmitting a signal to the antenna, rather than by changing the reflectivity of the antenna. In such systems, the tag first obtains and stores electrical power, for example in a buffer capacitor and, after the reader switches off the interrogation signal. the tag actively transmits a response. The amplitude of this response can be controlled by the modulator.

In tags operating according to backscatter modulation, the reflected signal may also be changed by switching a charge pump, for example as described in US 6,301,138. For a weaker response, additional impedance elements may be added.

RFID tags according to the invention can be used to optimize a tag to conform with a range of different radio regulations (FCC, ETSI, Japan...), which may differ from country to country. In some countries higher backscatter signal strengths are allowed (for example in the US). In those countries the backscatter signal level can be made stronger, resulting in a higher reliability of detection. Other regulations or applications may require a lower strength signal to avoid exceeding regulatory limits for signal strengths that are designed to prevent interference from occurring. The appropriate depth of modulation can for example be programmed into the memory of the tag along with the tag's unique identification code. The controller will then operate to switch the appropriate impedance elements accordingly.

Other embodiments are also within the scope of the invention, defined by the appended claims.

## Claims

1. A tag (30) for a radiofrequency identification communication system, the tag (30) comprising an antenna (31) for receiving a radiofrequency signal and an integrated circuit (35) connected to the antenna (31), the integrated circuit (35) comprising:
a modulator (34) configured to modulate a signal transmitted by the antenna (31);
a controller (33) configured to provide a modulation signal to the modulator (34); and
a power module (32) configured to generate a power supply for the controller (33) from the received radiofrequency signal,
wherein the modulator (34) comprises an adjustable impedance circuit configured to selectively reduce the depth of modulation of the signal transmitted by the antenna dependent on the modulation signal provided by the controller (33).

2. The tag of claim 1 wherein the tag is configured to operate using modulated backscatter, the modulator being configured to modulate the reflectivity of the antenna to the received radiofrequency signal.

3. The tag of claim 1 wherein the tag is configured to operate using load modulation, the modulator being configured to modulate the load of the antenna to the received radiofrequency signal.

4. The tag of claim 2 wherein the adjustable impedance circuit comprises two switchable impedance elements connected in parallel and operable by the controller to modulate the reflectivity of the antenna at two corresponding depths of modulation.

5. The tag of claim 4 wherein the switchable impedance elements each comprise a transistor switch in series with an impedance element.

6. The tag of claim 5 wherein the impedance element is a resistor.

7. The tag of claim 5 or claim 6 wherein the impedance element comprises a capadtor.

8. The tag of claim 4 wherein each switchable impedance element comprises a field effect transistor.

9. The tag of claim 4 comprising one or more further impedance elements connected in parallel with the two switchable impedance elements.

10. An integrated circuit (35) for a radiofrequency identification communication system tag (30), integrated circuit (35) being connectable to an antenna (31) and comprising:
a modulator (34) configured to modulate a signal transmitted by the antenna (31);
a controller (33) configured to provide a modulation signal to the modulator (34); and
a power module (32) configured to generate a power supply for the controller (33) from the received radiofrequency signal,
wherein the modulator (34) comprises an adjustable impedance circuit configured to selectively reduce the depth of modulation of the signal transmitted by the antenna dependent on the modulation signal provided by the controller (33).

11. A method of operating the tag of any one of claims 1 to 9, the method comprising:
the antenna (31) receiving a radiofrequency signal;
the power module (32) providing electrical power derived from the radiofrequency signal to the controller (33);
the controller (33) reading identification information and control information from a memory; and
the controller (33) providing a modulation signal to the modulator (34) to cause the antenna (31) to transmit a radiofrequency signal having a modulation depth according to the control information.
